# EUROPEAN PATENT SPECIFICATION

(11) **EP 2 096 791 B1**
(45) Date of publication and mention of the grant of the patent: **14.03.2012**
(21) Application number: 08700752.2
(22) Date of filing: 29.01.2008
(51) Int. Cl.: H04L 12/26, H04L 12/24, H04L 29/06

(54) **COLLECTION METHOD AND SYSTEM FOR HIGH RESOLUTION REPORTS OF QUALITY OF SERVICE**
VERFAHREN UND SYSTEM ZUR SAMMLUNG VON DETAILLIERTEN DIENSTGÜTE-BERICHTEN
PROCÉDÉ ET SYSTÈME DE COLLECTE POUR RAPPORTS DE HAUTE RÉSOLUTION DE QUALITÉ DE SERVICE

(30) Priority: 15.02.2007 CN 200710079855
(43) Date of publication of application: 02.09.2009
(60) Divisional application: 11180518.0
(73) Proprietor: Huawei Technologies Co., Ltd., Longgang District, Shenzhen Guangdong 518129 (CN)
(72) Inventor: LIN, Yangbo, Shenzhen Guangdong 518129 (CN)
(74) Representative: Körber, Martin Hans
(86) International application number: PCT/CN2008/000218
(87) International publication number: WO 2008/098468

(56) References cited:
- EP-A- 1 528 722
- EP-A- 1 739 900
- WO-A1-2006/002597
- CN-A- 1 791 002
- CN-A- 1 791 002
- CN-A- 1 791 003
- ALBRECHT SCHWARZ ALCATEL GERMANY ET AL: "Work Item H.248 QoS - Considerations concerning RTCP HR from an H.248 perspective; D 310" ITU-T DRAFT STUDY PERIOD 2005-2008, INTERNATIONAL TELECOMMUNICATION UNION, GENEVA ; CH, vol. STUDY GROUP 16, 3 April 2006 (2006-04-03), pages 1-7, XP017408106
- CLARK TELCHEMY INCORPORATED A PENDLETON NORTEL R KUMAR K CONNOR CISCO SYSTEMS G HUNT BT A: "RTCP HR - High Resolution VoIP Metrics Report Blocks; draft-ietf-avt-rtcphr-00.txt" IETF STANDARD-WORKING-DRAFT, INTERNET ENGINEERING TASK FORCE, IETF, CH, vol. avt, 1 February 2007 (2007-02-01), XP015049151 ISSN: 0000-0004

## Description

### FIELD OF THE TECHNOLOGY

The present invention relates to the field of communication, and more particularly to a method and a system for collecting high resolution (HR) reports about Quality of Service (QoS).

### BACKGROUND OF THE INVENTION

In order to share network resources and simplify the equipment upgrade and service expansion, networks adopt a separate architecture with two functional entities: a Media Gateway Controller (MGC) and a Media Gateway (MG).

The communications between the MG and the MGC is mainly based on the gateway control protocols jointly issued by the International Telecommunications Union (ITU) and the Internet Engineering Task Force (IETF), including H.248/MeGaCo Version 1, H.248 Version 2, H.248 Version 3, and the Media Gateway Control Protocol (MGCP) issued by the IETF in early days.

In addition, the Real-time Transport Protocol (RTP) is a transport protocol for real-time applications (including audio, video, data, and other multimedia applications) in IP networks. The Real-time Transport Control Protocol (RTCP) provides enhanced transport monitoring, control, and identification for the RTP (see RFC3550). As specified in the RTCP, statistics information about the Quality of Service (QoS) of the RTP packet data interacted between different equipments can be measured, so as to generate RTCP extended reports (RTCP XR) according to the measurement result.

Later on, in order to provide the monitoring function of the voice over IP (VoIP) QoS for services requiring higher resolution and more precise metrics, the types of the report block in the RTCP XR are extended, so as to generate the RTCP high resolution (RTCP HR) reports that have been gradually developed currently.

The RTCP HR reports may be generated by any type of RTP system that is capable of receiving RTP packet data through performing QoS statistics information measurement on the received RTP packet data.

The RTP system may collect and deliver various RTCP HR reports to the system, but the system may not need all the RTCP HR reports, which undoubtedly results in unnecessary overhead of performance and resources.

EP 1739900A discloses a method for acquiring media stream Quality of Service (QoS) periodically. In particular, it discloses the feature: the MGC sets an inspect duration during which the MGC periodically acquires the QoS information of the media stream and effectively controlling the media stream; Two ways for the MGC periodically acquiring the QoS information are provided, the MG actively submits the QoS information to the MGC and the MG submits the QoS information to the MGC according to the periodic request of the MGC. However, EP 1739900A fails to discloses how to control the collection of TRCT HR reports.

CN 791002A, discloses a method for the MGC acquiring QoS information in the next generation network. In particular, it discloses the feature: an MGC sends an order for acquiring QoS information to an MG, the MG report the corresponding QoS information of the media stream to the MGC according to the order. CN 791002A fails to discloses how to control the collection of TRCT HR reports.

EP 528722A, discloses a method for an end to end signaling procedure intended to improve standard RTCP protocol for the support of streaming services in wireless networks, particularly it discloses that detecting concurrently with said real-time protocol and performing corresponding disposal. EP 528722A fails to discloses how to control the collection of TRCT HR reports.

ALBRECHT SCHWARZ ALCATEL GERMANY ET AL : "Work Item H.248 QoS Considerations concerning RTCP HR from an H.248 perspective; D 310", discloses some preliminary consideration concerning RTCP HR (D4, page 1), it just describes the need of technical solution described by the claim 1 of the present application, it fails to discloses how to control the collection of TRCT HR reports.

CLARK TELCHEMY INCORPORATED A PENDLETON NORTEL R KUMAR KCONNOR CISCO SYSTEMS G HUNT BT A: "RTCP HR-High Resolution VoIP Metrics Report Blocks; draft-ietf-avt-rtcphr-00.txt", discloses that RTCP HR report blocks may be produced by any of the types of RTP systems which are defined in RFC 3550 [2] as capable of receiving RTP packets. But it fails to discloses how to control the collection of TRCT HR reports.

### SUMMARY OF THE INVENTION

Accordingly, in an embodiment, the present invention is directed to a method and a system for collecting HR reports about QoS, which are capable of controlling the collection of RTCP HR reports according to the actual requirements, so as to avoid unnecessary overhead of performance and resources.

Objectives of the embodiments of the present invention are achieved through the following technical solutions.

A method for collecting HR reports about QoS is provided in an embodiment of the present invention. The method includes the following steps.

A collection device obtains control information for collecting HR reports about QoS.

The collection device performs a corresponding operation on the collecting of HR reports about QoS according to the control information;
wherein the control information comprises at least one of elements or units, and each element or unit is configured to describe one or one type of HR reports about QoS; and performing, by the collection device, the corresponding operation on the collecting of HR reports about QoS according to the element or unit contained in the control information.

### BRIEF DESCRIPTION OF THE DRAWINGS

The present invention will become better und erstood from the detailed description given herein below for illustration only, and thus is not limitative of the present invention, and wherein:

FIG. 1 shows an NGN networking architecture;

FIG 2 is a schematic structural view of an RTP connection;

FIG 3 is a schematic flow chart of a method for collecting HR reports about QoS according to an embodiment of the present invention;

FIG. 4 is a schematic structural view of a collection device according to an embodiment of the present invention;

FIG 5 is a schematic structural view of a control device according to an embodiment of the present invention; and

FIG 6 is a schematic structural view of a system for collecting HR reports about QoS according to an embodiment of the present invention.

### DETAILED DESCRIPTION OF THE EMBODIMENTS

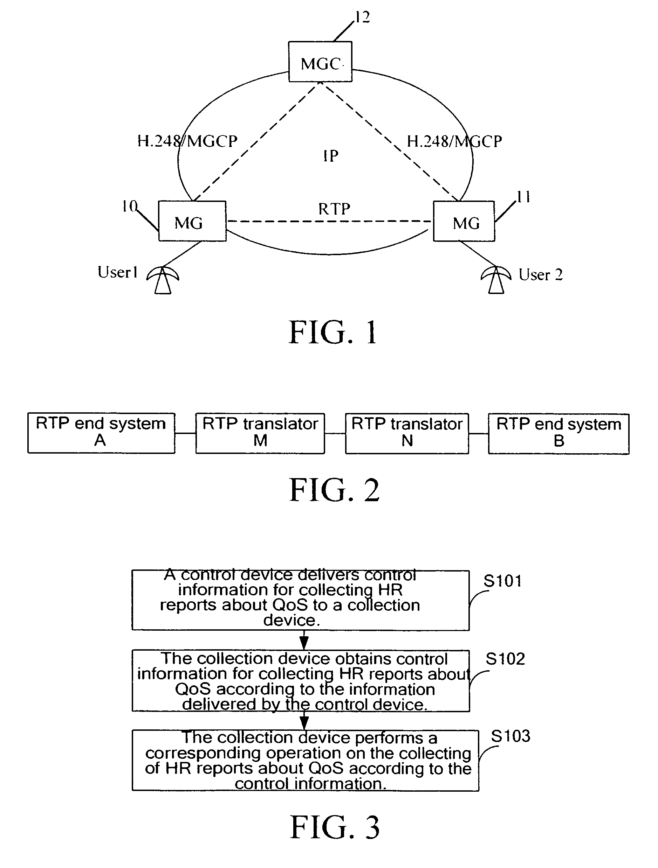

As shown in FIG 1, the networking architecture of the next generation network (NGN) includes an MG 10 and an MG 11 respectively connected to User 1 and User 2, and an MGC 12 is configured to control the MG 10 and the MG 11. The MGC 12 is responsible for a call control function, and the MG 10 and the MG 11 are responsible for a service bearer function, thereby realizing the separation of a call control plane and a service bearer plane.

Various resources on the MG 10 and the MG 11 are abstractly expressed as terminations. The combination between terminations is abstractly expressed as a context. Based on such an abstract mode, the connection of a call is actually a series of operations on terminations and contexts, and such operations are accomplished through request and reply commands between the MGC and the MGs. Types of the commands include Add, Modify, Subtract, Move, AuditValue, AuditCapabilities, Notify, ServiceChange, and the like. Command parameters (also called descriptors) contained in the commands include property, signal, event, statistic, and the like. Those parameters relevant to each other in service are encapsulated into a package logically.

A system for measuring quality of service (QoS) statistics information on the received RTP packet data includes an RTP end system, an RTP mixer, and an RTP translator. The RTP translator is configured to forward RTCP HR reports generated by a neighboring RTP system to another neighboring RTP system, and is also configured to generate RTCP HR reports and send the generated RTCP HR reports to a neighboring RTP system. The RTP end system and the RTP mixer can generate and send RTCP HR reports only, but cannot forward RTCP HR reports generated by other RTP systems.

A method for collecting HR reports about QoS according to an embodiment of the present invention is realized based on an RTP connection as shown in FIG 2. The RTP connection includes an RTP end system A, an RTP end system B, as well as an RTP translator M and an RTP translator N disposed between the RTP end system A and the RTP end system B. The RTP packet data is interacted between the RTP end system A and the RTP end system B based on the RTP protocol. The interacted RTP packet data is forwarded by the RTP translator M and the RTP translator N.

Once RTP packet data arrives at an RTP system, each RTP system that receives the RTP packet data can measure the RTP packet data, generate RTCP HR reports according to a measurement result, and send the generated RTCP HR reports. The RTP translator M and the RTP translator N can also forward RTCP HR reports that are generated by other RTP systems and sent to the RTP translator M and the RTP translator N.

Taking the RTP translator M for example, the RTCP HR reports that can be collected and reported by the RTP translator M include:
RTCP HR reports generated by the RTP translator M through monitoring RTP packet data sent by the RTP end system A;
RTCP HR reports generated by the RTP translator N through monitoring RTP packet data sent by the RTP end system A and sent to the RTP translator M;
RTCP HR reports generated by the RTP end system B through monitoring RTP packet data sent by the RTP end system A, and forwarded to the RTP translator M via the RTP translator N;
RTCP HR reports generated by the RTP translator N through monitoring RTP packet data sent by the RTP end system B, and sent to the RTP translator M;
RTCP HR reports generated by the RTP translator M through monitoring RTP packet data sent by the RTP end system B; and
RTCP HR reports generated by the RTP end system A through monitoring RTP packet data sent by the RTP end system B, and sent to the RTP translator M.

As shown in FIG 3, a method for collecting HR reports about QoS according to an embodiment of the present invention includes the following steps.

In Step S101, a control device delivers control information for collecting HR reports about QoS, i.e., RTCP HR reports, to a collection device.

In Step S101, the control device may be an MGC, and the collection device may be an MG When delivering the control information for collecting HR reports about QoS to the MG, the MGC may extend the H.248 protocol by adding a property parameter, so as to contain the control information.

The property parameter may be defined in an existing package or a new package. The property parameter is a string type, and includes a series of elements or units. Each element or unit is configured to describe one or one type of HR reports about QoS that needs to be collected.

When each element or unit is configured to describe one or one type of HR reports about QoS, at least one of the following information may be applied: a measuring name, an originating name, a report type, and a sub-block type.

The measuring name refers to a canonical name or a portion of a canonical name of an RTP system for monitoring RTP streams associated with RTCP HR reports and generating the RTCP HR reports, for example, a host name "X" obtained from a canonical name in the form of a domain name "X@Y".

The originating name refers to a canonical name or a portion of a canonical name of a source RTP system for the RTP streams associated with the RTCP HR reports.

The report type refers to a combination of a measuring mode and/or a measuring position for generating the RTCP HR reports. The measuring mode includes: cumulative, interval, and alert modes. The measuring position includes: locally generated, relayed from remote IP endpoint, and relayed from remote Ext endpoint.

The sub-block type refers to a type of an RTCP HR sub-block contained in the RTCP HR reports, which may be a basic loss/discard metrics sub-block, burst/gap metrics sub-block, playout metrics sub-block, concealed seconds metrics sub-block, delay and packet delay variation metrics sub-block, call quality metrics sub-block, or vendor specific extension sub-block.

The measuring name, originating name, report type, and/or sub-block type may respectively employ wildcards, for example, using "*" to represent "all".

The measuring name, originating name, report type, and/or sub-block type may all appear, or may appear partially. When some of them do not appear, it represents default settings. For example, the default settings represent "all".

When the MGC needs to instruct the MG to collect certain RTCP HR reports, the MGC delivers the above property parameter to the MG, and the control information contained in the property parameter includes a series of elements or units describing HR reports about QoS that need to be collected.

When the MGC does not need to instruct the MG to collect a certain RTCP HR report or certain RTCP HR reports, the MGC may delete elements or units describing the RTCP HR reports from the control information contained in the subsequently delivered property parameter.

When the MGC needs to instruct the MG to recollect a certain RTCP HR report or certain RTCP HR reports, the MGC may add elements or units describing the RTCP HR reports into the control information contained in the subsequently delivered property parameter.

The MG may be an RTP end system, an RTP mixer, or an RTP translator.

For example, as for the RTP connection of "RTP end system A-RTP translator M-RTP translator N-RTP end system B", if the property parameter is named as "collected RTCP HR reports (crtcphrr)", the value of the property parameter is a string list of elements or units in a format of "measuring name:originating name:report type:sub-block type". The ID of the locally generated cumulative metrics report is 0, and the basic loss/discard metrics sub-block corresponds to the least significant bit in a map field in a header of an RTCP HR report. At this time, if the MGC delivers {crtcphrr="B:A:0:1"} to the MG serving as the RTP translator M, it represents that the MGC needs to collect RTCP HR reports about the basic/discard metrics generated by the RTP end system B through measuring RTP packet data sent from the RTP end system A based on a locally cumulating manner. If the MGC delivers {crtcphrr="M:B:*:* "} to the MG serving as the RTP translator N, it represents that the MGC needs to collect RTCP HR reports about all metrics generated by the RTP translator M through measuring RTP packet data sent from the RTP end system B.

In Step S102, the collection device obtains control information for collecting HR reports about QoS according to the information delivered by the control device.

In Step S 103, the collection device performs a corresponding operation on the collecting of HR reports about QoS according to the control information.

After obtaining the control information, the collection device, such as the MG, compares elements or units in the newly obtained control information with elements or units in the previously obtained control information.

If it is found that one element or unit for describing one or one type of HR reports about QoS is deleted from the control information, the MG stops collecting the HR reports about QoS described by the element or unit, and maintains or deletes the collected HR reports about QoS described by the element or unit.

If it is found that one element or unit for describing one or one type of HR reports about QoS is added into the control information, the MG resets the collected HR reports about QoS described by the element or unit, and starts to collect the HR reports about QoS described by the element or unit.

If the control information is obtained for the first time, as for the previously obtained control information, it is considered that no control information was ever obtained, that is to say, elements or units in the control information obtained for the first time are all considered to be added into the control information.

The above embodiment is described based on an example that the collection device obtains control information for collecting HR reports about QoS according to information delivered by the control device. In addition, control information for collecting HR reports about QoS may also be preset in the collection device, and the control information for collecting HR reports about QoS is also defined through a property parameter. The definitions of elements and units in the control information are similar to that described in the first embodiment, and the details thereof are not described herein again.

The control device, such as the MGC, may also obtain the control information about a current operation on the collecting of HR reports about QoS performed by the collection device, such as the MG, at any time by auditing or querying the property parameter or elements or units in the property parameter.

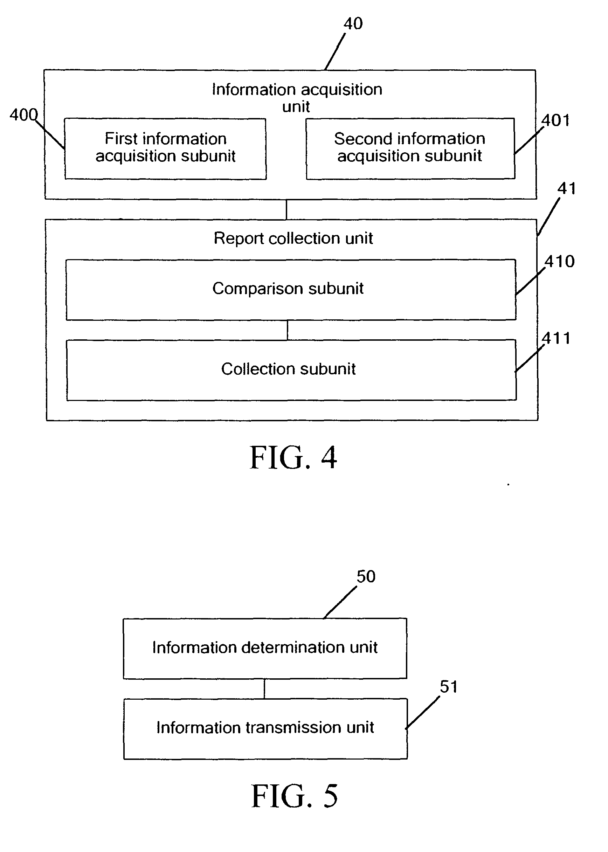

As shown in FIG 4, a collection device according to an embodiment of the present invention includes an information acquisition unit 40 and a report collection unit 41. The information acquisition unit 40 includes a first information acquisition subunit 400 or a second information acquisition subunit 401. The report collection unit 41 includes a comparison subunit 410 and a collection subunit 411.

The information transmission relations between the units in the collection device are described as follows.

The information acquisition unit 40 obtains control information for collecting HR reports about QoS. The first information acquisition subunit 400 may obtain control information for collecting HR reports about QoS according to information preset in the collection device, or the second information acquisition subunit 401 may also obtain control information for collecting HR reports about QoS according to information delivered by the control device.

The report collection unit 41 performs a corresponding operation on the collecting of HR reports about QoS according to the control information obtained by the information acquisition unit 40. A specific process is described as follows.

The comparison subunit 410 compares the newly obtained control information with the previously obtained control information.

When the comparison result obtained by the comparison subunit 410 shows that one element or unit for describing one or one type of HR reports about QoS is deleted from the control information, the collection subunit 411 stops collecting the HR reports about QoS described by the element or unit, and maintains or deletes the collected HR reports about QoS described by the element or unit. The specific processing process is similar to that described in the first embodiment, and the details thereof are not described herein again.

When the comparison result obtained by the comparison subunit 410 shows that one element or unit for describing one or one type of HR reports about QoS is added into the control information, the collection subunit 411 resets the collected HR reports about QoS described by the element or unit, and starts to collect the HR reports about QoS described by the element or unit. The specific processing process is similar to that described in the first embodiment, and the details thereof are not described herein again.

As shown in FIG 5, a control device according to an embodiment of the present invention includes an information determination unit 50 and an information transmission unit 51.

The information determination unit 50 determines control information for collecting HR reports about QoS according to actual requirements. The information transmission unit 51 delivers the control information determined by the information determination unit to a collection device. The specific processing process is similar to that described in the first embodiment, and the details thereof are not described herein again.

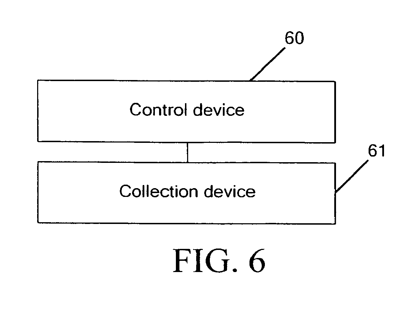

As shown in FIG 6, a system for collecting HR reports about QoS according to an embodiment of the present invention includes a control device 60 and a collection device 61.

The control device 60 determines control information for collecting HR reports about QoS and delivers the control information to the collection device 61. The collection device 61 obtains the control information delivered by the control device and performs a corresponding operation on the collecting of HR reports about QoS according to the control information. The specific processing process is similar to that described in the first embodiment, and the details thereof are not described herein again.

As seen from the above specific embodiments of the present invention, the collection device 61 can perform a corresponding operation on the collection of HR reports about QoS according to the obtained control information for collecting HR reports about QoS, so as to control the collection of RTCP HR reports according to the actual requirements, thereby avoiding unnecessary overhead of performance and resources.

Through the above descriptions of the implementation manners, those skilled in the art can clearly understand that, the present invention is realized through combining software with a necessary universal hardware platform, which definitely can be realized through hardware. Based on such understanding, the technical solutions of the present invention or parts of the technical solutions of the present invention making contributions to the prior art are substantially presented in the form of a software product. The computer software product is stored in a storage medium, and contains several instructions to instruct computer equipment (for example, a personal computer, a server, or network equipment) to execute the method as described in the embodiments of the present invention.

It will be apparent to those skilled in the art that various modifications and variations can be made to the present invention without departing from the scope of the invention. In view of the foregoing, it is intended that the present invention cover modifications and variations of this invention provided they fall within the scope of the following claims.

## Claims

1. A method for collecting Real-time Transport Control Protocol, RTCP, high resolution, HR, reports about Quality of Service, QoS, **characterized in that** the method comprises:
obtaining, by a collection device, control information for collecting HR reports about QoS (S102); and
performing, by the collection device, a corresponding operation on the collecting of HR reports about QoS according to the control information (S103);
wherein the control information comprises at least one of elements or units, and each element or unit is configured to describe one or one type of HR reports about QoS; and
performing, by the collection device, the corresponding operation on the collecting of HR reports about QoS according to the element or unit contained in the control information.

2. The method according to claim 1, wherein the step of obtaining, by the collection device, control information for collecting HR reports about QoS comprises:
obtaining control information for collecting HR reports about QoS according to information preset in the collection device; or
obtaining control information for collecting HR reports about QoS according to information delivered by a control device.

3. The method according to claim 1 or 2, wherein the control information is contained in a property parameter.

4. The method according to claim 1, wherein each element or unit is configured to describe one or one type of HR reports about QoS, at least one of the following information is applied: a measuring name, an originating name, a report type, and a sub-block type; and
performing, by the collection device, the corresponding operation on the collecting of HR reports about QoS according to at least one of the measuring name, the originating name, the report type, and the sub-block type contained in the element or unit.

5. The method according to claim 4, wherein wildcards or default settings are used to represent the measuring name, originating name, report type, and/or sub-block type contained in the element or unit.

6. The method according to claim 1, 4 or 5, wherein the step of performing, by the collection device, a corresponding operation on the collecting of HR reports about QoS according to the control information comprises:
comparing, by the collection device, elements or units in the newly obtained control information with elements or units in the previously obtained control information after obtaining the newly control information.

7. The method according to claim 6,wherein the method comprises:
stopping, by the collection device, collecting the HR reports about QoS described by the element or unit, and maintaining or deleting the collected HR reports about QoS described by the element or unit when the comparison result obtained by the collection device shows that one element or unit for describing one or one type of HR reports about QoS is deleted from the control information; or
resetting the collected HR reports about QoS described by the element or unit, and starting to collect the HR reports about QoS described by the element or unit when the comparison result obtained by the collection device shows that one element or unit for describing one or one type of HR reports about QoS is added into the control information.

## Patentansprüche

1. Verfahren zum Sammeln von detaillierten bzw. HR-Berichten des Real-Time Transport Control Protocol RTCP über Dienstgüte QoS, **dadurch gekennzeichnet, dass** das Verfahren die folgenden Schritte umfasst:
Erhalten von Steuerinformationen durch eine Sammlungseinrichtung zum Sammeln von HR-Berichten über QoS (S102); und
Ausführen einer entsprechenden Operation durch die Sammlungseinrichtung an dem Sammeln von HR-Berichten über QoS gemäß den Steuerinformationen (S 103);
wobei die Steuerinformationen Elemente und/oder Einheiten umfassen und jedes Element bzw. jede Einheit dafür ausgelegt ist, einen bzw. eine Art von HR-Berichten über QoS zu beschreiben; und
Durchführen der entsprechenden Operation durch die Sammlungseinrichtung an dem Sammeln von HR-Berichten über QoS gemäß dem Element oder der Einheit, das bzw. die in den Steuerinformationen enthalten ist.

2. Verfahren nach Anspruch 1, wobei der Schritt des Erhaltens von Steuerinformationen durch die Sammlungseinrichtung zum Sammeln von HR-Berichten über QoS Folgendes umfasst:
Erhalten von Steuerinformationen zum Sammeln von HR-Berichten über QoS gemäß in der Sammlungseinrichtung voreingestellten Informationen; oder
Erhalten von Steuerinformationen zum Sammeln von HR-Berichten über QoS gemäß durch eine Steuereinrichtung abgelieferten Informationen.

3. Verfahren nach Anspruch 1 oder 2, wobei die Steuerinformationen in einem Eigenschaftsparameter enthalten sind.

4. Verfahren nach Anspruch 1, wobei jedes Element oder jede Einheit dafür ausgelegt ist, einen oder eine Art von HR-Berichten über QoS zu beschreiben, wobei mindestens eine der folgenden Informationen angewandt wird: ein Messungsname, ein Ursprungsname, ein Berichttyp und ein Subblocktyp; und
Ausführen der entsprechenden Operation durch die Sammlungseinrichtung an dem Sammeln von HR-Berichten über QoS gemäß mindestens einem des Messungsnamens, des Ursprungsnamens, des Berichttyps und des Subblocktyps, die in dem Element oder der Einheit enthalten sind.

5. Verfahren nach Anspruch 4, wobei Wildcards oder Vorgabeeinstellungen verwendet werden, um den in dem Element oder der Einheit enthaltenen Messungsnamen, Ursprungsnamen, Berichttyp und/oder Subblocktyp zu repräsentieren.

6. Verfahren nach Anspruch 1, 4 oder 5, wobei der Schritt des Ausführens einer entsprechenden Operation durch die Sammlungseinrichtung an dem Sammeln von HR-Berichten über QoS gemäß den Steuerinformationen Folgendes umfasst:
Vergleichen von Elementen oder Einheiten in den neu erhaltenen Steuerinformationen durch die Sammlungseinrichtung mit Elementen oder Einheiten in den zuvor erhaltenen Steuerinformationen nach dem Erhalten der neuen Steuerinformationen.

7. Verfahren nach Anspruch 6, wobei das Verfahren Folgendes umfasst:
Stoppen des Sammelns der HR-Berichte über QoS, die durch das Element oder die Einheit beschrieben werden, durch die Sammlungseinrichtung und Aufrechterhalten oder Löschen der gesammelten HR-Berichte über QoS, die durch das Element oder die Einheit beschrieben werden, wenn das durch die Sammlungseinrichtung erhaltene Vergleichsergebnis zeigt, dass ein Element oder eine Einheit zum Beschreiben eines oder einer Art von HR-Berichten über QoS aus den Steuerinformationen gelöscht ist; oder
Rücksetzen der gesammelten HR-Berichte über QoS, die durch das Element oder die Einheit beschrieben werden, und Beginnen des Sammelns der HR-Berichte über QoS, die durch das Element oder die Einheit beschrieben werden, wenn das durch die Sammlungseinrichtung erhaltene Vergleichsergebnis zeigt, dass ein Element oder eine Einheit zum Beschreiben eines oder einer Art von HR-Berichten über QoS in die Steuerinformationen hinzugefügt ist.

## Revendications

1. Procédé de collecte de rapports de haute résolution, HR, de Protocole de Contrôle de Transport en Temps Réel, RTCP, d'une Qualité de Service, QoS, **caractérisé en ce que** le procédé comprend :
l'obtention, par un dispositif de collecte, d'informations de contrôle pour collecter des rapports HR de QoS (S 102) ; et
l'exécution, par le dispositif de collecte, d'une opération correspondante sur la collecte de rapports HR de QoS en fonction des informations de contrôle (S 103) ;
dans lequel les informations de contrôle comprennent au moins l'un d'éléments ou d'unités, et chaque élément ou unité est configuré(e) pour décrire un ou un type de rapports HR de QoS ; et
l'exécution, par le dispositif de collecte, de l'opération correspondante sur la collecte de rapports HR de QoS en fonction de l'élément ou de l'unité contenu(e) dans les informations de contrôle.

2. Procédé selon la revendication 1, dans lequel l'étape d'obtention, par le dispositif de collecte, d'informations de contrôle pour collecter les rapports HR de QoS comprend :
l'obtention d'informations de contrôle pour collecter des rapports HR de QoS en fonction d'informations préétablies dans le dispositif de collecte ; ou
l'obtention d'informations de contrôle pour collecter des rapports HR de QoS en fonction d'informations délivrées par un dispositif de contrôle.

3. Procédé selon la revendication 1 ou 2, dans lequel les informations de contrôle sont contenues dans un paramètre de propriété.

4. Procédé selon la revendication 1, dans lequel chaque élément ou unité est configuré(e) pour décrire un ou un type de rapports HR de QoS, au moins l'une des informations suivantes étant appliquée : un nom de mesure, un nom d'origine, un type de rapport, et un type de sous-bloc ; et
l'exécution, par le dispositif de collecte, de l'opération correspondante sur la collecte de rapports HR de QoS en fonction d'au moins l'un du nom de mesure, du nom d'origine, du type de rapport et du type de sous-bloc contenu dans l'élément ou l'unité.

5. Procédé selon la revendication 4, dans lequel des caractères génériques ou des réglages par défaut sont utilisés pour représenter le nom de mesure, le nom d'origine, le type de rapport, et/ou le type de sous-bloc contenu dans l'élément ou l'unité.

6. Procédé selon la revendication 1, 4 ou 5, dans lequel l'étape d'exécution, par le dispositif de collecte, d'une opération correspondante sur la collecte de rapports HR de QoS en fonction des informations de contrôle comprend :
la comparaison, par le dispositif de collecte, d'éléments ou d'unités dans les informations de contrôle nouvellement obtenues à des éléments ou unités dans les informations de contrôle obtenues précédemment, après l'obtention des nouvelles informations de contrôle.

7. Procédé selon la revendication 6, comprenant :
l'arrêt, par le dispositif de collecte, de la collecte des rapports HR de QoS décrits par l'élément ou l'unité, et la mise à jour ou la suppression des rapports HR de QoS collectés décrits par l'élément ou l'unité quand le résultat de comparaison obtenu par le dispositif de collecte montre qu'un élément ou une unité pour décrire un ou un type de rapports HR de QoS est supprimé(e) des informations de contrôle ; ou
le rétablissement des rapports HR de QoS collectés décrits par l'élément ou l'unité, et le début de la collecte des rapports HR de QoS décrits par l'élément ou l'unité quand le résultat de comparaison obtenu par le dispositif de collecte montre qu'un élément ou une unité pour décrire un ou un type de rapports HR de QoS est ajouté(e) aux informations de contrôle.
